(19) Europäisches Patentamt
European Patent Office
Office européen des brevets

(11) **EP 1 660 305 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(21) Anmeldenummer: **04764523.9**

(22) Anmeldetag: **26.08.2004**

(51) Int Cl.:
***B29C 65/34*** *(2006.01)*   ***F16L 47/03*** *(2006.01)*
***G05F 1/66*** *(2006.01)*

(86) Internationale Anmeldenummer:
**PCT/EP2004/009548**

(87) Internationale Veröffentlichungsnummer:
**WO 2005/023522 (17.03.2005 Gazette 2005/11)**

(54) **INDUKTIONSKOMPENSATION FÜR HEIZWENDELSCHWEISSGERÄTE**

INDUCTIVE COMPENSATION FOR A HEATING COIL WELDING DEVICE

COMPENSATION D'INDUCTION POUR APPAREILS DE SOUDAGE A BOBINE DE CHAUFFAGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **01.09.2003 DE 10340206**

(43) Veröffentlichungstag der Anmeldung:
**31.05.2006 Patentblatt 2006/22**

(73) Patentinhaber: **PF Schweisstechnologie GmbH 36304 Alsfeld (DE)**

(72) Erfinder:
• **MERLE, Bernd**
  **36304 Alsfeld (DE)**

• **KEHM, Stefan**
  **63688 Gedern-Wenings (DE)**
• **SPYCHALSKI-MERLE, Achim**
  **36304 Alsfeld (DE)**

(74) Vertreter: **Eisenführ, Speiser & Partner Patentanwälte Rechtsanwälte Postfach 31 02 60 80102 München (DE)**

(56) Entgegenhaltungen:
**EP-A- 0 335 010      EP-A- 0 437 149**
**EP-A- 1 022 114      WO-A-82/02593**
**WO-A-97/20682        US-A- 4 978 837**

EP 1 660 305 B1

**Beschreibung**

Die vorliegende Erfindung betrifft ein Verfahren zur Optimierung des Schweißenergieeintrags in die Heizwendel eines Heizwendelfittings, gemäß dem Oberbegriff des Anspruchs 1 sowie eine Heizwendel-Schweißvorrichtung gemäß dem Oberbegriff des Anspruchs 19, die insbesondere zum Durchführen des vorstehend genannten Verfahrens geeignet ist.

Um Kunststoffinstallationsbauteile, wie beispielsweise Rohre, dicht zu verbinden, werden in der Praxis neben der Heizelementstumpf- vor allem die Heizwendel-Schweißtechnik eingesetzt. Bei der Heizwendel-Schweißtechnik werden Heizwendelfittings, auch bekannt als Heizwendel-Muffen, zur axialen Verbindung von Rohren, beispielsweise Installationsrohren für die Gas- oder Wasserversorgung, verwendet. Heizwendelfittings weisen dazu ein aus Kunststoff, beispielsweise Polyethylen, hergestelltes Fittingrohr auf, in dessen Rohrwand wenigstens eine freiliegende oder verdeckte Heizwendel angeordnet ist. Über zwei nach außen geführte Anschlussenden, die in Anschlusselementen enden, ist die Heizwendel mit einer elektrischen Schweißstrom-Versorgungseinheit verbindbar.

Zum Verschweißen zweier Installationsrohre aus Kunststoff werden diese in das Fittingrohr eingeschoben, das einen Innendurchmesser aufweist, der geringfügig größer ist als der Außendurchmesser der beiden miteinander zu verbindenden Rohre. Anschließend wird durch Anlegen einer Schweißspannung der Heizwendel elektrischer Strom zugeführt, wobei die derart zugeführte elektrische Energie im elektrischen bzw. ohmschen Widerstand der Heizwendel in Wärme umgesetzt wird. Diese durchdringt langsam, von der Heizwendel ausgehend, die Kunststoffmaterialien der Rohre und des Fittings. Bei Überschreiten des Erweichungspunktes bzw. Erreichen des Schmelzbereiches plastifizieren bzw. erweichen diese Materialien und fließen ineinander. Beim anschließenden Erkalten kommt es zu einer unlösbaren, homogenen und gas- bzw. flüssigdichten Verbindung zwischen den beiden Rohren und dem Fitting. Für diesen Vorgang wird auch der Begriff "Heizwendelschweißen" bzw. "Schweißen" verwendet.

Bei einem bekannten Heizwendelschweißverfahren, wie z. B. aus der WO 97/20682 bekannt, wird der Effektivwert einer an die Heizwendel angelegte Wechselspannungs-Schweißspannung über die Dauer des Schweißvorganges von der Schweißstrom-Versorgungseinheit konstant gehalten. Die für die Verschweißung notwendige Wärmemenge ist somit im Wesentlichen durch die Schweißspannung und/oder die Schweißzeit einstellbar. Bei modernen Heizwendelschweißgeräten werden vor dem eigentlichen Schweißvorgang die Schweißparameter durch einen Einlesevorgang zum Einstellen der vorgesehenen Schweißspannung und Schweißzeit eingegeben.

Die US 4,684,789 offenbart ein Verfahren und eine Vorrichtung zum elektrischen Wärmeschweißen eines thermoplastischen Fittings mit einem elektrischen Widerstandheizelement, welches darin angeordnet ist, wobei eine geregelte Menge elektrischer Energie dem Heizelement während des Schweißprozesses zugeführt wird. Dabei wird vorgeschlagen, die Impedanz und optional den Widerstand des Heizelements unter Verwendung einer Spannung mit kleiner Leistung, um die Größe des zu Verschweißenden Fittings daraus zu bestimmen.

Die Eingabe der Schweißparameter erfolgt dabei beispielsweise mittels eines Barcodes, der vom Hersteller um Verwechslungen ausschließen zu können, auf jedem Bauteil in Form eines Etiketts aufgebracht ist und damit einen festen und unverlierbaren Bestandteil des Fittings darstellt. Dadurch können grundsätzliche Fehlerquellen, wie eine manuelle Falscheingabe der Schweißspannung und/oder der Schweißzeit, vermieden werden.

Der Aufbau des Barcodes ist standardisiert und ermöglicht neben der automatischen Einstellung der genannten Schweißparameter zusätzlich die Möglichkeit, mit dafür ausgelegten Schweißgeräten Verlegedaten von Rohrnetzen wie Herstellerinformationen der Rohrteile, Verlegeortsinformationen, etc. zu dokumentieren. Im Barcode ist auch die bekannte Temperaturkompensation verschlüsselt. Hierbei können aktuelle Schweißgeräte die aktuelle Umgebungstemperatur hinsichtlich des benötigten Schweißenergieeintrages in das Fitting berücksichtigen.

Heizwendelschweißgeräte wurden in der Vergangenheit als Generator versorgte oder als Netzgeräte mit Wechselspannungseingang und Wechselspannungsausgang ausgeführt. Zur Leistungssteuerung und damit zur Steuerung des Energieeintrages in das Heizwendelfitting wird überwiegend die Eingangsspannung, beispielsweise die Netzspannung mit 230V/50Hz, angeschnitten und mit einem Transformator auf eine Kleinspannung herabgesetzt. Um ausgangsseitig die dem Heizwendel des Fittings zugeführte elektrische Leistung zu steuern, wird der Effektivwert der Ausgangsspannung gemessen und über eine Regeleinheit der Phasen- bzw. Zündwinkel $\alpha$ des Phasenanschnitts gesteuert. Das Ausgangssignal bei diesen Heizwendelschweißgeräten gleicht daher idealisiert einem angeschnittenen Sinus mit der Grundfrequenz des Eingangssignals, d. h. bei der oben genannten Netzspannung 50 Hz bzw. bei dazu äquivalenten von einem Generator erzeugten Spannungen zwischen 40 Hz und 70 Hz.

Die seit dem Jahr 2001 gültige europäische Norm EN 61000-3-2 lässt nach Ablauf gewisser Übergangsfristen die vorstehend für vom Stromnetz versorgte Geräte dargestellte Technik nicht mehr zu, da die Norm u. a. gerade die Begrenzung von Oberschwingungsströmen, die in das öffentliche Niederspannungsnetz eingespeist werden, zum Ziel hat. Netzrückwirkungen wie eine Phasenverschiebung zwischen Strom und Spannung infolge induktiver bzw. kapazitiver Lasten und harmonische Rückwirkungen, wie die Oberwellen, bedingt durch den vorstehend erwähnten Phasenanschnitt, müssen vorgegebene Grenzwerte einhalten. Die EN 61000-3-2 entspricht national der VDE 0838 "Elektromagnetische Verträglichkeit (EMV) Grenzwerte für Oberschwingungsströme".

Daher intensivieren die Hersteller von Spannungs- bzw. Stromversorgungsgeräten die Entwicklung geeigneter Spannungskonvertertechnologien. Dabei ist die so genannte Powerfaktorkorrektur (PFC) eine Möglichkeit, den Eingangsstrom von elektrischen Verbrauchern so zu formen, dass Oberwellen die Maximalwerte der EN 61000-3-2 einhalten. Grundsätzlich sind hier zwei Prinzipien zu nennen: passive PFC und aktive PFC. Bei der passiven PFC wird eine Induktivität im Eingangskreis des Verbrauchers verwendet, um Energie aus dem Versorgungsnetz zwischenzuspeichern und so Stromspitzen zu dämpfen. Bei der aktiven PFC wird eine vorgeschaltete oder in das jeweilige Gerät integrierte Steuerelektronik eingesetzt, die ständig den Energiebedarf des Verbrauchers überwacht. Die benötigte Energie wird in der Form eines nahezu perfekt sinusförmigen Stroms aus dem Versorgungsnetz entnommen und zwischengespeichert. Solche Hochfrequenzspannungskonverter weisen eingangsseitig nahezu einen $\cos(\varphi)$ von 1 und nur geringe harmonische Störungen auf. Ausgangsseitig stellen diese Geräte eine Gleichspannung bereit.

Die Verwendung einer Gleichspannung bringt für das Anwendungsgebiet des Heizwendelschweißens gewisse Probleme mit sich. Da die Heizwendel der Fittings für gewöhnlich die Form einer Spule aufweisen, besitzt die Heizwendel eine gewisse - von der Spulengeometrie bestimmte - Induktivität. Aufgrund der ausgangsseitig mit einer Wechselspannungs-Schweißspannung arbeitenden aktuellen Heizwendelschweißgeräte sind die marktgängigen Heizwendelfittings indirekt für den Einsatz mit einer Wechselspannungs-Schweißspannung (50-60Hz +/- 15%) und den oben angesprochenen Phasenanschnitt zur Leistungsteuerung ausgelegt und getestet worden. D. h. der beispielsweise im Barcode eines Fittings enthaltene Effektivwert der Schweißspannung als ein wesentlicher Schweißparameter ist für den Betrieb mit einer Wechselspannungs-Schweißspannung in einem bestimmten Frequenzbereich ausgelegt.

Für den Effektivwert der in einem Heizwendelfitting umgesetzten Wirkleistung $P_{w,eff}$ also die dem Heizwendel tatsächlich zugeführten Heizleistung bzw. Schweißleistung gilt prinzipiell der folgende Zusammenhang

$$P_{w,\,eff} = U_{eff} \cdot I_{eff} \cdot \cos\varphi = \frac{U_{eff}^{2}}{\sqrt{R^{2} + (2\pi fL)^{2}}} \cos\left(\arctan(2\pi fL/R)\right).$$

Dabei sind

$U_{eff}$     der Effektivwert der Spannung am Heizwendelfitting,
$I_{eff}$     der Effektivwert des Stromes durch das Heizwendelfitting,
R     der ohmsche Widerstand des Heizwendelfitting, und
L     die Induktivität der Heizwendel des Heizwendelfitting.

Die Heizwendel des Heizwendelfittings bildet aufgrund ihrer Induktivität $L$ zusammen mit ihrem ohmschen Widerstand R eine komplexe Last $R + i \cdot 2\pi fL$, die eine Phasenverschiebung zwischen Strom und Spannung hervorruft. Das Verhältnis der Reaktanz der Heizwendel $2\pi fL$ zu ihrem ohmschen Widerstand R entspricht dem Tangens des Phasenwinkels $\varphi$ zwischen dem Strom I und der Spannung U.

Dem vorstehenden formelmäßigen Zusammenhang lässt sich entnehmen, dass eine Gleichspannung mit der Größe des Effektivwertes der angegebenen Wechselspannungs-Schweißspannung am Fitting, d. h. die Frequenz der angelegten Schweißspannung $f$ ist gleich 0 Hz, der Effektivwert der Schweißleistung im Heizwendelfitting auf jeden Fall größer als im Betrieb mit Wechselspannung ist. Ebenso leicht ist erkennbar, dass der Effektivwert der Schweißleistung bei einer Erhöhung der Grundfrequenz der Wechselspannungs-Schweißspannung abnimmt.

D. h., für die Schweißleistung in der Heizwendel kann allgemein geschrieben werden:

$$P_{w,\,eff} = f(U, R, L).$$

Weiter ist zu berücksichtigen, dass bei der Steuerung des Effektivwerts der Wechselspannungs-Schweißspannung über den Phasenanschnittwinkel $\alpha$ der Phasenanschnittsteuerung Oberwellen erzeugt werden, die für gewöhnlich Frequenzen mit einem ganzzahligen Vielfachen der angeschnittenen Grundwelle besitzen. Der gesamte Schweißenergieeintrag in die Heizwendel setzt sich damit aus den unterschiedlichen Beiträgen der Grundwelle und der Oberwellen zusammen, wobei mit zunehmender Frequenz die Amplituden der Oberwellen kleiner ausfallen. Zusätzlich nimmt die Wirkung der Induktivität L der Heizwendel mit steigender Frequenz zu. Dadurch wird der entsprechende Oberwellenstrom und damit der Schweißenergiebeitrag der jeweiligen Oberwelle mit steigender Frequenz zusätzlich vermindert. Somit gilt für die Heizleitung im Heizwendel etwas genauer

$$P_{w,\;eff} = f\big(U(\alpha), R, L\big)$$

Es sei noch angemerkt, dass die Netzspannung bzw. die Generatorspannung für gewöhnlich selber Schwankungen aufweist und daher der Phasenanschnittswinkel $\alpha$ zur Steuerung des gewünschten Effektivwertes der Wechselspannungs-Schweißspannung nicht konstant ist. Damit ist auch die auf die Oberwellen entfallende Schweißleistung gewissen Schwankungen unterworfen.

Schließlich wird der ohmsche Widerstand des Heizwendel selbst von der Temperatur beeinflusst, d. h., der ohmsche Widerstand der Heizwendel nimmt mit steigender Temperatur zu. Damit gilt letztlich für den Effektivwert der Schweißleistung

$$P_{w,\;eff} = f(U(\alpha), R(T), L),$$

wobei T für die Temperatur der Heizwendel steht.

Es wurden Versuchsreihen sowohl mit Gleichspannung als auch mit Wechselspannungen, bei denen die Grundfrequenz deutlich von der Grundfrequenz der für die Heizwendelfittings bekannten Wechselspannungs-Schweißspannungen abwich, als Schweißspannung durchgeführt. Bei den Versuchen mit einer Gleichspannung in der Größe des Effektivwertes der zu dem Fitting angegebenen Wechselspannungs-Schweißspannung hat sich herausgestellt, dass Unterschiede bei der zugeführten Schweißenergie im ungünstigsten Fall von bis zu 50% auftreten, insbesondere bei Rohren mit großen Durchmessern. Mit anderen Worten: In einem für Wechselspannung ausgelegten Heizwendelfitting trägt eine Gleichspannungs-Schweißspannung der Größe des auf dem Barcode des Fittings angegebenen Effektivwerts der Wechselspannungs-Schweißspannung $U_{eff}$ eine bis zu 50% zu große Wärmemenge in das Heizwendelfitting ein. Eine Abweichung von mehr als 5% kann jedoch schon zu negativen Auswirkungen für die Qualität der Schweißverbindung führen. So kam es in Versuchen zu Überhitzungen des Kunststoffmaterials bis hin zum Einfallen dünnwandiger Rohre. Gerade unter hohen Sicherheitsanforderungen für Gasleitungen ist dieser Umstand nicht tolerierbar.

Im umgekehrten Fall, nämlich der Verwendung einer Wechselspannungs-Schweißspannung mit einer Grundfrequenz höher als die der für die Fittings bekannten Wechselspannungs-Schweißspannung, war der Schweißenergieeintrag deutlich geringer, d. h., die Verschweißung wird nicht mit der vorherbestimmten Schweißenergiemenge durchgeführt. Für die Qualität der Schweißverbindung kann dies sogar noch fataler sein, als der vorstehend angesprochene Fall der Überhitzung der Schweißstelle, da eine minderwertige Verschweißung aufgrund der Unterschreitung des optimalen Schweißenergieeintrages von außen unerkannt bleibt.

Eine nahe liegende sichere Maßnahme wäre nun, mit Auslaufen der Übergangsfristen der EN 61000-3-2 für die "alten" Heizwendelschweißgeräte mit Wechselspannungs-Schweißspannung diese für den Fall der vom Stromnetz versorgten Geräte durch neue Heizwendelschweißgeräte mit Gleichspannungs-Schweißspannung zu ersetzen und den Einsatz der dafür nicht ausgelegten Heizwendelfittings aus Sicherheitsgründen zu verbieten. Dies hätte zur Folge, dass die "alten" Heizwendelfittings entweder weggeworfen werden oder an den Hersteller zur Umetikettierung zurückgeführt werden müssten. Dies wäre mit erheblichen Kosten verbunden. Andererseits gibt es im Bereich der durch einen Generator versorgten Heizwendelschweißgeräte für beispielsweise den abgesetzten Baustellenbetrieb auf dem globalen Markt der Heizwendel-Schweißtechnik Anwendungsbereiche, in denen die Versorgungsspannung eine Grundfrequenz von beispielsweise 200Hz oder höher aufweist.

Auch hier müsste grundsätzlich der Einsatz von Heizwendelfittings, die für diese Frequenzen nicht ausgelegt wurden, verboten werden. Andererseits ist dieser Markt zu klein, um die geringen Stückzahlen von Heizwendelfittings mit für diese Grundfrequenzen optimierten Angaben für die Schweißspannungen und Schweißzeiten, zu den marktüblichen Preisen anzubieten.

Es ist daher eine Aufgabe der vorliegenden Erfindung, ein Verfahren sowie eine Vorrichtung der eingangs genannten Art zu schaffen, die eine präzise Einstellung der an der Heizwendel anliegenden Schweißspannung und damit eine Optimierung des Schweißenergieeintrages ermöglichen, wenn eine von einem bekannten Toleranzbereich der Grundfrequenz der für den Heizwendelfitting bekannten Wechselspannungs-Schweißspannung abweichende, insbesondere eine Gleichspannung, als Schweißspannung eingesetzt wird.

Hinsichtlich des Verfahrens wird die vorstehende Aufgabe durch die Merkmale des Anspruchs 1 gelöst. In den sich daran anschließenden Ansprüchen 2 bis 19 finden sich vorteilhafte Ausgestaltungen hierzu.

Das erfindungsgemäße Verfahren zur Optimierung des Schweißenergieeintrags in die Heizwendel eines Heizwendelfittings kommt bei einer Schweißstrom-Versorgungseinheit zur Anwendung, die über Anschlussleitungen und Verbindungselemente mit Anschlusselementen des Heizwendelfittings verbindbar ist. Dabei sind wenigstens der Effektivwert einer Wechselspannungs-Schweißspannung mit einer in einem bestimmten Toleranzbereich liegenden Grundfrequenz und eine zugehörige Schweißzeit bekannt. Diese Schweißparameter können beispielsweise codiert in einem Barcode auf einem an dem Heizwendelfitting angebrachten Etikett entnehmbar sein.

Nachdem die notwendigen elektrischen Verbindungen zwischen der Schweißstrom-Versorgungseinheit und dem Heizwendelfitting hergestellt sind, kann durch Anlegen einer Schweißspannung an die Anschlüsse des Heizwendelfittings der eigentliche Schweißvorgang beginnen. Erfindungsgemäß soll jedoch eine in der Grundfrequenz beliebige Schweißspannung eingesetzt werden können, d. h. die von einem bestimmten Toleranzbereich der Grundfrequenz der zu dem Heizwendelfitting bekannten Wechselspannungs-Schweißspannung deutlich abweichen darf.

In einer ersten Ausführungsform der Erfindung wird als Schweißspannung eine Gleichspannung eingesetzt. Dieses erfindungsgemäße Gleichspannungs-Heizwendelschweißgerät ist vorteilhaft als Stromnetz versorgtes Gerät verwendbar, da bei diesem die eingangs geschilderten Netzrückwirkungen so gut wie nicht auftreten.

In einer zweiten Ausführungsform der Erfindung kann als Schweißspannung eine Wechselspannung zur Anwendung kommen, die in der Grundfrequenz deutlich vom Toleranzbereich der für das Heizwendelfitting bekannten Wechselspannungs-Schweißspannung abweicht. Dieses erfindungsgemäße Wechselspannungs-Heizwendelschweißgerät ist besonders vorteilhaft als Generator versorgtes Gerät - beispielsweise im abgesetzten Einsatz auf Baustellen - verwendbar, wobei häufig Generatoren eingesetzt werden, die eine Wechselspannung mit zum Beispiel 200Hz oder 400Hz zur Verfügung stellen.

Es sei angemerkt, dass es selbstverständlich möglich ist, ein Heizwendelschweißgerät derart auszuführen, dass es für beide vorstehenden Anwendungen - als ein "All-Round" Heizwendelschweißgerät - der vorstehenden ersten und zweiten Ausführungsform geeignet ist.

In beiden Ausführungsformen bzw. in dem "All-Round"- Heizwendelschweißgerät wird zur Umsetzung des erfindungsgemäßen Verfahrens wenigstens eine oder mehrere elektrische Kenngrößen des Heizwendelfittings erfasst. Anschließend wird mithilfe eines aus der wenigstens einen oder der mehreren erfassten elektrischen Kenngrößen des Heizwendelfittings ein Energieeintragskorrekturfaktor ermittelt, mit dem wenigstens ein Schweißparameter angepasst wird und damit ein optimaler Schweißenergieeintrag in das Heizwendelfitting gesteuert werden.

Als Schweißparameter können die Schweißzeit, also die Zeitdauer, während der die Schweißspannung an dem Heizwendelfitting anliegt, oder der Effektivwert der angelegten Schweißspannung eingestellt werde. Selbstverständlich ist es auch möglich, beide Größen gleichzeitig anzupassen. Es sei hervorgehoben, dass die Anpassung des oder der Schweißparameter für jeden einzelnen Schweißvorgang individuell erfolgt. Damit wird für jedes Heizwendelfitting der Energieeintrag auf Basis der elektrischen Kenngrößen des jeweiligen Heizwendelfittings individuell optimal angepasst. Die eingangs genannten Probleme lassen sich damit ohne eine Erhöhung des Aufwandes vor Ort bzw. ohne eine Erschwerung der Handhabung bzw. Bedienung des Heizwendelschweißgerätes vermeiden.

Vorzugsweise wird die wenigstens eine oder die mehreren elektrischen Kenngrößen des Heizwendelfittings vor dem Schweißvorgang, d. h. nach dem Anschluss des Heizwendelfittings an das Heizwendelschweißgerät und dem Einlesen der zum Heizwendelfitting bekannten bzw. mitgelieferten Schweißparameter, erfasst. Es ist aber auch denkbar, sofort mit dem Schweißvorgang zu beginnen und die Anpassung, beispielsweise der Schweißzeit, parallel zum Schweißvorgang durchzuführen.

Als elektrische Kenngröße wird bei dem erfindungsgemäßen Verfahren wenigstens als eine erste elektrische Kenngröße die Induktivität der Heizwendel des Heizwendelfittings erfasst, insbesondere dann, wenn der ohmsche Widerstand der Heizwendel des Heizwendelfittings dem an diesem angebrachten Etikett entnehmbar ist. Es ist jedoch auch möglich, zusätzlich als eine zweite elektrische Kenngröße den ohmschen Widerstand der Heizwendel des Heizwendelfittings zu erfassen.

In einer weiteren Ausführungsform wird der ohmsche Widerstand der Heizwendel parallel zum Schweißvorgang fortlaufend bzw. in bestimmten zeitlichen Abständen bestimmt. Es hat sich nämlich gezeigt, dass der ohmsche Widerstand der Heizwendel selber einer gewissen Temperaturabhängigkeit unterliegt und hier eine weitere - wenn auch geringe - Beeinflussung des Schweißenergieeintrages in das Fitting liegt.

In allen vorstehend genannten Ausführungsformen der Erfindung wird der E-nergieeintragkorrekturfaktor wenigstens aus einem der folgenden Einzelkorrekturfaktoren gebildet, d. h., der Energieeintragskorrekturfaktor kann jeweils auf einen einzelnen Korrekturaspekt oder auf eine beliebige Kombination dieser Einzelkorrekturfaktoren ausgerichtet sein.

In einem ersten Aspekt der Erfindung ist ein erster Einzelkorrekturfaktor ein Induktivitätskorrekturfaktor, der im Wesentlichen zur Berücksichtigung des Einflusses der Induktivität der Heizwendel Heizwendelfittings auf den Schweißenergieeintrag bei einer Abweichung vom Toleranzbereich der Grundfrequenz der zum Heizwendelfitting bekannten Wechselspannungs-Schweißspannung vorgesehen ist.

In einem zweiten Aspekt der Erfindung ist ein zweiter Einzelkorrekturfaktor ein Oberwellenkorrekturfaktor, der im Wesentlichen zur Berücksichtigung des unterschiedlichen Schweißenergieeintrages der Oberwellen einer Wechselspannungs-Schweißspannung bei einer Abweichung vom Toleranzbereich der Grundfrequenz der zum Heizwendelfitting bekannten Wechselspannungs-Schweißspannung vorgesehen ist.

In einem dritten Aspekt der Erfindung ist ein dritter Einzelkorrekturfaktor ein Widerstandskorrekturfaktor, der im Wesentlichen zur Korrektur der Auswirkung der Temperaturabhängigkeit des ohmschen Widerstandes der Heizwendel des Heizwendelfittings auf den Schweißenergieeintrag vorgesehen ist.

Die Grundfrequenz der zu den Heizwendelfittings bekannten Wechselspannungs-Schweißspannung liegt vorzugsweise in einem Toleranzbereich von etwa 40 Hz bis 70 Hz.

Bei der Erfassung der elektrischen Kenngrößen der Heizwendel des Heizwendelfittings gibt es für die Erfassung der Induktivität der Heizwendel verschiedene Möglichkeiten bzw. dem Fachmann bekannte schaltungstechnische Mittel. Beispielhaft und nicht abschließend sei erwähnt, dass die Induktivität aus dem Phasenwinkel zwischen Strom und Spannung eines an das Heizwendelfitting angelegten Wechselspannungsmesssignals bestimmt werden kann. Weiter ist es möglich, die Induktivität über eine Veränderung der Resonanzfrequenz eines Messschwingkreises, zu dem die Heizwendel des Heizwendelfittings geschaltet wird, zu bestimmen. Die Induktivität könnte auch aus der Differenz des komplexen Widerstandes der Heizwendel des Heizwendelfittings bei wenigstens zwei in der Frequenz unterschiedlichen Messsignalen bestimmt werden.

Im Zusammenhang mit der erfindungsgemäßen Kompensation der reaktiven elektrischen Eigenschaft der Heizwendel des Heizwendelfittings sei noch festgehalten, dass entweder die Induktivität der Heizwendel oder deren Reaktanz bei der interessierenden Grundfrequenz, für die das Heizwendelfitting ursprünglich ausgelegt wurde, erfasst und zur Bestimmung des Induktivitätskorrekturfaktors verwendet werden kann.

Hinsichtlich der Erfassung der elektrischen Kenngrößen ist weiter anzumerken, dass dies über separate Messleitungen erfolgen kann, die an den Anschlusselementen des Heizwendelfittings anschließbar sind. Es ist jedoch auch möglich, die elektrischen Kenngrößen über die Anschlussleitungen der Schweißstrom-Versorgungseinheit an den Anschlusselementen des Heizwendelfittings zu realisieren.

Hinsichtlich der Vorrichtung wird die vorstehende Aufgabe durch die Merkmale des Anspruchs 20 gelöst. In den sich daran anschließenden Ansprüchen 21 bis 27 finden sich vorteilhafte Ausgestaltungen hierzu. Im Zusammenhang mit der Heizwendel-Schweißvorrichtung ist zu bemerken, dass damit die gleichen Vorteile erzielbar sind, wie sie vorstehend im Zusammenhang mit den Verfahren erläutert worden sind.

Weitere vorteilhafte Ausgestaltungen sowie ein Ausführungsbeispiel werden nachstehend anhand der Zeichnungsfiguren erläutert. In diesem Zusammenhang ist zu bemerken, dass sich die bei der Beschreibung verwendeten Begriffe "links", "rechts", "unten" und "oben" auf die Zeichnungsfiguren mit normal lesbaren Bezugszeichen beziehen. Hierbei ist:

Fig. 1   eine schematische Ansicht einer erfindungsgemäßen Heizwendel-Schweißvorrichtung;

Fig. 2   ein Ersatzschaltbild für die Heizwendel eines Heizwendelfittings zusammen mit einer vereinfachten Darstellung der Heizwendel-Schweißvorrichtung aus Fig. 1; und

Fig. 3   ein Flussdiagramm mit den einzelnen Verfahrensschritten zur Steuerung eines geeigneten Schweißenergieeintrages in ein Heizwen-delfitting.

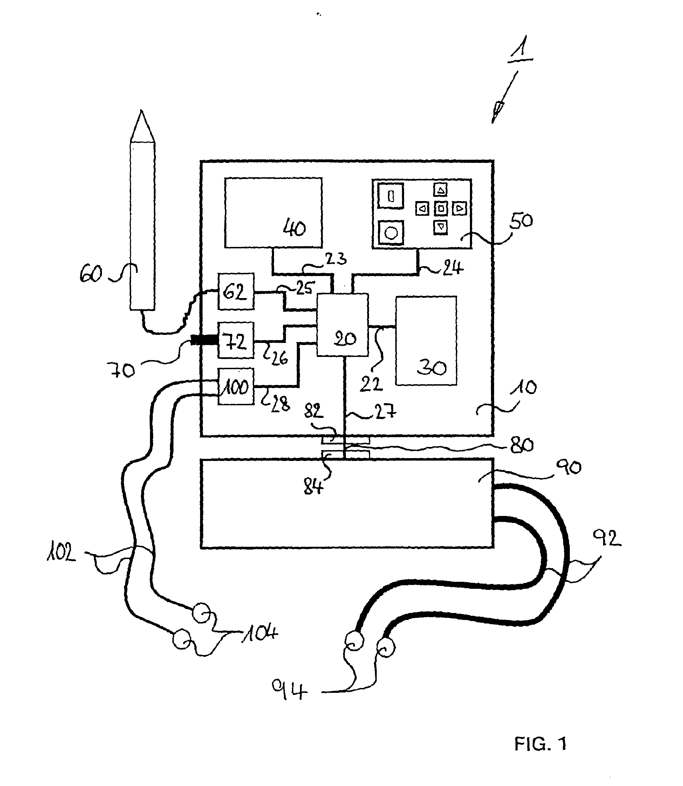

Fig. 1 zeigt ein Ausführungsbeispiel für ein Verbindungsgerät 1, insbesondere ein Heizwendelschweißgerät mit einer erfindungsgemäßen Steuer-Vorrichtung 10 zur automatischen Optimierung des Schweißenergieeintrages in ein Heizwendelfitting. Die Steuer-Vorrichtung 10 kann als integraler Bestandteil verwendet werden oder als modulares Zusatzgerät für ein solches Verbindungsgerät 1 ausgelegt sein.

Die Steuer-Vorrichtung 10 weist eine zentrale Steuereinheit 20, beispielsweise eine CPU, zum u. a. bestimmen des Energieeintragskorrekturfaktors gemäß der Erfindung auf, die über eine Datenleitung 22 mit einem Speicher 30 für u. a. das Zwischenspeichern wenigstens einer oder mehrerer erfasster elektrischer Kenngrößen eines Heizwendelfittings verbunden ist. In dem Speicher 30 können auch die aktuellen Schweißdaten wie Daten bzgl. dem verwendeten Heizwendelfitting bzw. Elektroformteil abgelegt werden. Es ist auch denkbar, dies mit bekannten Funktionen zur Protokollierung und Dokumentierung von Rohrnetzen zu kombinieren.

Die zentrale Steuereinheit 20 ist über eine Datenleitung 23 mit einem Display 40 verbunden, auf dem alphanumerische und/oder grafische Symbole wiedergebbar sind. Mittels des Displays 40 können z. B. von der Steuer-Vorrichtung 10 erfasste Bauteil-Identifikationskennungen, die eine oder die mehreren (bzw. eine Auswahl) bereits für ein Bauteil erfassten elektrischen Kenngrößen und ggf. Systemmeldungen alphanumerisch und/oder grafisch dargestellt werden.

Über eine weitere Datenleitung 24 ist die zentrale Steuereinheit 20 mit einem Tastaturfeld 50 zur manuellen Eingabe und/oder Auswahl von einzeln Gerätefunktionen ausgestattet.

Über eine Datenleitung 25 ist die zentrale Steuereinheit 20 mit einem Barcodeleser 60 verbunden, wobei in der Datenleitung 25 eine digitale Umsetzeinrichtung 62 für die vom Barcodeleser 60 gelesenen Daten in digitale Daten vorgesehen ist. Mithilfe des Barcodelesers 60 können der zentralen Steuereinheit vor dem Schweißvorgang u. a. spezifische Daten über das zu verarbeitende Heizwendelfitting eingegeben werden. So werden in dem international standardisierten Barcode auf Heizwendelfittings u. a. der Effektivwert einer Wechselspannungs-Schweißspannung und die korrekte Schweißzeit angegeben. Weiter ist auch die Information zur Temperaturkompensation vorhanden, mithilfe derer die zentrale Steuereinheit die Umgebungstemperatur beim Schweißvorgang berücksichtigen kann. Dazu steht die zentrale Steuereinheit 20 über eine Datenleitung 26 mit einem Temperatursensor 70 in Verbindung, wobei ebenfalls in der Datenleitung 26 eine Einrichtung 72, wie ein A/D-Wandler, zum Umwandeln der von dem Temperatursensor 70 erfassten Daten in digitale Daten geschaltet ist.

Schließlich ist die zentrale Steuereinheit 20 über eine Datenleitung 27 mit einer Schnittstelle 80 verbunden, über die die Steuer-Vorrichtung 10 mit einer Schweißstrom-Versorgungseinheit 90 für den Verbindungsvorgang verbindbar ist. Es sei angemerkt, dass die Schnittstelle 80 sowohl hardwaremäßig als auch softwaremäßig ausgeführt sein kann.

In der Fig. 1 ist die hardwaremäßige Variante gezeigt, bei der eine Steckverbindung, bestehend aus einem Stecker 82 und einer Buchse 84, vorgesehen ist. Damit ist die Steuer-Vorrichtung 10 modular an der Schweißstrom-Versorgungseinheit 90 anschließbar. An der Schweißstrom-Versorgungseinheit 90 befinden sich noch Anschlussleitungen 92 und Verbindungselemente 94, die mit nicht gezeigten Anschlusselementen des nicht abgebildeten Heizwendelfittings elektrisch verbunden werden können.

Zur Erfassung elektrischer Kenngrößen der Heizwendel eines Heizwendelfittings ist die zentrale Steuereinheit 20 über eine Datenleitung 28 mit einem schaltungstechnischen Mittel, nämlich einer Messeinrichtung 100 verbunden. Die Messeinrichtung 100 ist mittels Messleitungen 102, an deren Enden sich Anschlusselemente 104 befinden, mit den Anschlusselementen des Heizwendelfittings verbindbar. Die Messeinrichtung 100 ist dafür ausgelegt, mit einem geeigneten Messverfahren wenigstens die Reaktanz bzw. die Induktivität und ggf. den ohmschen Widerstand der Heizwendel des Heizwendelfittings zu erfassen. Diese erfassten elektrischen Kenngrößen wandelt die Messeinrichtung 100 in digitale Daten um und stellt sie der zentralen Steuereinheit 20 zur Weiterverarbeitung zur Verfügung. Dabei kann das Verbindungsgerät 1 so ausgelegt sein, dass der ohmsche Widerstand der Heizwendel laufend bzw. in bestimmten zeitlichen Abständen erfasst wird. Damit ist es möglich während des Schweißvorganges die Rate des Energieeintrags in das Fitting noch präziser zu steuern, indem die Temperaturabhängigkeit des ohmschen Widerstandes laufend kompensiert bzw. der Energieeintrag entsprechend korrigiert wird.

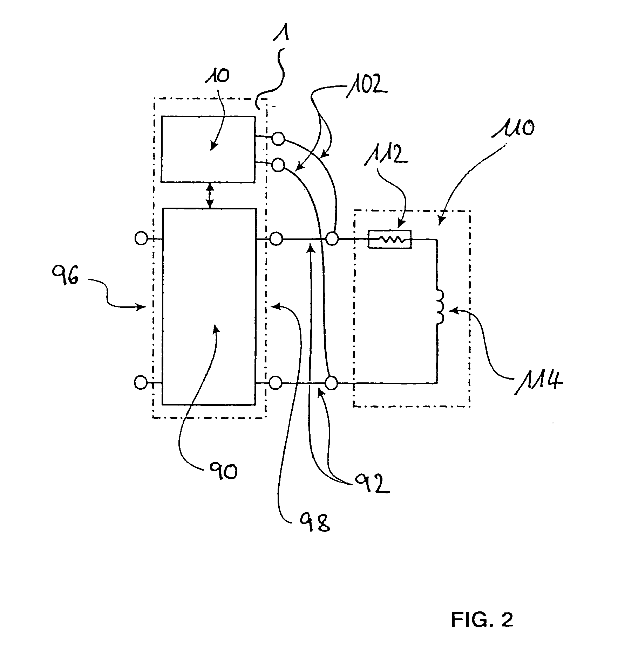

Fig. 2 zeigt in vereinfachter schematischer Darstellung das Verbindungsgerät 1 mit der Steuer-Vorrichtung 10 und der Schweißstrom-Versorgungseinheit 90 aus der Fig. 1, wobei die Schweißstrom-Versorgungseinheit über Anschlussleitungen 92 mit einem Heizwendelfitting 110 verbunden ist. Die Heizwendel des Heizwendelfittings 110 ist dabei mit ihrem elektrischen Ersatzschaltbild bestehend aus einem ohmschen Widerstand 112 und einer Induktivität 114 dargestellt. Die Steuer-Vorrichtung 10 ist mittels Messleitungen 102 ebenfalls mit den Anschlusselementen des Heizwendelfittings 110 verbunden. Weiter besitzt die Schweißstrom-Versorgungseinheit 90 einen Anschluss 96 zum Anschließen an ein elektrisches Energieversorgungsnetz, wobei hierbei in der vom Stromnetz versorgten Variante des Verbindungsgerätes 1 eine Wechselspannung im Bereich 220/230V mit 50-60Hz zur Anwendung kommt. In der vom Stromnetz unabhängigen Variante des Verbindungsgerätes 1 ist ein Anschluss an einen Stromgenerator vorgesehen, der ausgangsseitig eine Wechselspannung mit einer bestimmten Amplitude und Frequenz, die von der üblichen Netzfrequenz abweichen kann, zur Verfügung stellt.

Am Ausgang stellt die Schweißstrom-Versorgungseinheit 90 an ihrem Ausgang 98 vorzugsweise in der vom Stromnetz versorgten Variante eine Gleichspannungs-Schweißspannung zur Verfügung, um die benötigte Schweißenergie über die Heizwendel in den Heizwendelfittings in Form von Wärme einzutragen.

Die für den abgesetzten Einsatz ausgelegte Schweißstrom-Versorgungseinheit kann auch am Ausgang wieder eine Wechselspannung als Schweißspannung zur Verfügung steht, wobei die vorstehend bereits genannten Vorteile durch die Berücksichtigung der Auswirkungen eines Unterschiedes in der Grundfrequenz der Versorgungsspannung auf den Schweißenergieeintrag in das Heizwendelfitting realisiert werden.

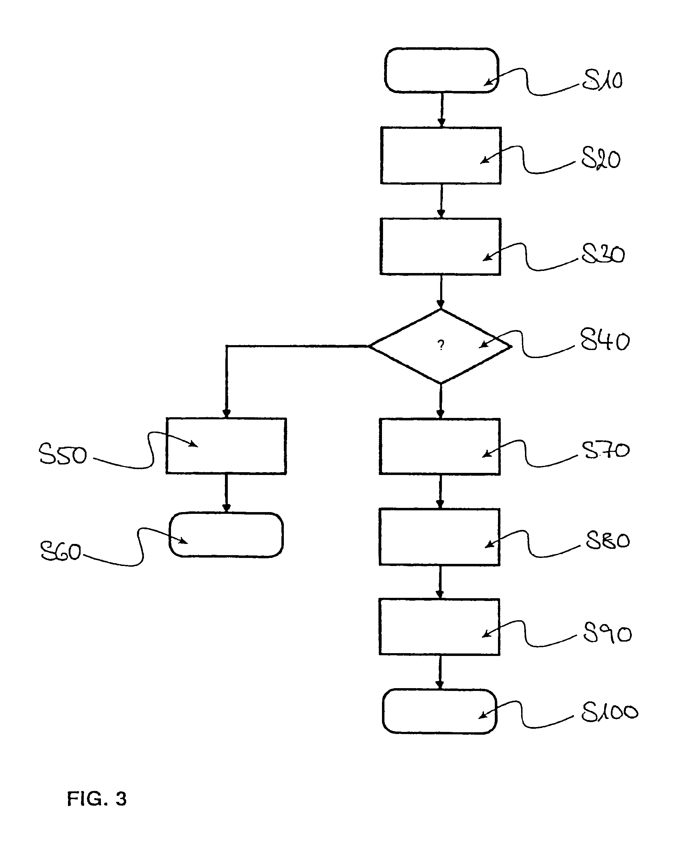

Fig. 3 zeigt abschließend ein Flussdiagramm mit den Schritten des erfindungsgemäßen Verfahrens zum Steuern des korrekten Schweißenergieeintrags in das Heizwendelfitting beim Heizwendelschweißen. Es sei angemerkt, dass das Flussdiagram nur die Verfahrenschritte wiedergibt, die sich konkret auf die optimale Steuerung der Schweißenergie, insbesondere der dabei notwendigen, erfindungsgemäßen Korrekturen eines oder mehrerer Schweißparameter unter Berücksichtigung eines oder mehrerer der folgenden Aspekte bezieht, nämlich hinsichtlich des Einflusses der Induktivität der Heizwendel auf den Energieeintrag in das Heizwendelfitting, hinsichtlich des Anteiles der Oberwellen am Energieeintrag einer angeschnittenen Wechselspannungs-Schweißspannung und/oder hinsichtlich der Auswirkungen der Temperaturabhängigkeit des ohmschen Widerstandes der Heizwendel des Heizwendelfittings auf den Energieeintrag.

Das Verfahren beginnt mit dem Schritt S10. Es sei angenommen, dass zu diesem Zeitpunkt die zu verbindenden Rohre bereits mittels des Heizwendelfittings - noch lösbar - zusammengesteckt sind und alle notwendigen Verkabelungen, d. h. die Schweißstromversorgungsleitungen und die Messleitungen, an dem Heizwendelfitting bereits angeschlossen sind.

Zuerst werden in Schritt S20 die beispielsweise in dem Barcode des Heizwendelfittings enthaltenen Informationen, insbesondere die vom Hersteller des Fittings angegebenen Schweißparameter, Effektivwert der Wechselspannungs-schweißspannung und die Schweißzeit, mittels des Barcodelesers (siehe Fig. 1) in die zentrale Steuereinheit der Steuervorrichtung eingegeben.

Im sich an den Schritt S20 anschließenden Schritt S30 werden elektrische Kenngrößen der Heizwendel des Heizwendelfittings, insbesondere der ohmsche Widerstand und die Induktivität, mittels der in der Steuer-Vorrichtung enthaltenen Messeinrichtung über die am Heizwendelfitting angeschlossenen Messleitungen erfasst.

In dem Schritt S40 findet eine Plausibilitäts- bzw. Fehlerkontrolle statt. Hierbei kann z. B. der erfasste ohmsche Widerstand mit dem im Barcode angegebenen Wert verglichen werden. Sollte hier eine über einem festgelegten Toleranzbereich liegende Abweichung festgestellt werden, kann dies auf einen Kabelfehler oder korrodierte Anschlusselemente hindeuten, in solch einem Fall verzweigt das Verfahren zum Schritt S50, in dem über das Display der Steuer-Vorrichtung eine entsprechende Diagnose- bzw. Fehlermeldung an den Bediener ausgegeben wird und anschließend mit Schritt S60 der Vorgang abgebrochen, d. h., der Schweißprozess wird nicht gestartet.

Wenn die Plausibilitäts- bzw. Fehlerkontrolle in Schritt S 40 ohne Unregelmäßigkeiten abgelaufen ist, wird das Verfahren in Schritt S70 fortgeführt, indem die zentrale Steuereinheit aus den erfassten elektrischen Kenngrößen der Heizwendel und den Daten des Barcodes entsprechend der vorliegenden Erfindung einen Energieeintragskorrekturfaktor ermittelt.

Der Energieeintragskorrekturfaktor berücksichtigt, für den Fall, dass eine Gleichspannung als Schweißspannung eingesetzt wird, nicht aufgrund der Induktivität der Heizwendel zu einer Phasenverschiebung zwischen dem Schweißstrom und der Schweißspannung kommt und daher keine Blindleistung im Heizwendelfitting auftritt. D. h., beim Betrieb mit einer Gleichspannungs-Schweißspannung muss mit einem niedrigeren Spannungswert gearbeitet werden als dem Effektivwert einer Wechselspannungs-Schweißspannung bzw. es muss die Schweißzeit verkürzt werden. Natürlich ist auch eine Kombination aus beiden Maßnahmen möglich.

Weiter berücksichtigt der Energieeintragskorrekturfaktor, dass bei einer Gleichspannungs-Schweißspannung keine Oberwellen zum Energieeintrag in das Heizwendelfitting beitragen. Schließlich wird durch kontinuierliche Erfassung des ohmschen Widerstandes der Heizwendel des Fittings die Temperaturabhängigkeit des ohmschen Widerstandes berücksichtigt. Es sei noch angemerkt, dass der die Anteile am Energieeintragskorrekturfaktor hinsichtlich der Oberwellen und hinsichtlich der Temperaturabhängigkeit des ohmschen Widerstandes der Heizwendel auch aus Messreihen empirisch ermittelt werden können und als Konstanten bzw. Tabellen im Programm der zentralen Steuereinheit des Verbindungsgerätes abgelegt sein können.

Der Energieeintragskorrekturfaktor berücksichtigt, für den Fall, dass eine Wechselspannung als Schweißspannung eingesetzt wird, die mit ihrer Grundfrequenz vom Toleranzbereich der Grundfrequenz der zum Fitting bekannten Wechselspannungs-Schweißspannung vorzugsweise nach oben, d. h. z. B. eine Grundfrequenz von 200 Hz besitzt, abweicht, dass es dann durch die frequenzabhängige Reaktanz der Induktivität der Heizwendel zu einer veränderten Phasenverschiebung zwischen dem Schweißstrom und der Schweißspannung kommt und daher eine veränderte Blindleistung im Heizwendelfitting auftritt. In diesem Fall muss mit einem höheren Effektivwert der Wechselspannungs-Schweißspannung gearbeitet werden als auf dem Fitting im Barcode angegeben bzw. es muss die Schweißzeit verlängert werden. Natürlich ist auch wieder eine Kombination aus beiden Maßnahmen möglich.

Weiter berücksichtigt der Energieeintragskorrekturfaktor, dass in diesem Fall auch die Oberwellen zum Energieeintrag in das Heizwendelfitting einen anderen Beitrag leisten. Schließlich kann auch in diesem Fall durch kontinuierliche Erfassung des ohmschen Widerstandes der Heizwendel des Fittings die Temperaturabhängigkeit des ohmschen Widerstandes berücksichtigt werden. Es sei auch hier angemerkt, dass der die Anteile am Energieeintragskorrekturfaktor hinsichtlich der Oberwellen und hinsichtlich der Temperaturabhängigkeit des ohmschen Widerstandes der Heizwendel aus Messreihen empirisch ermittelt werden kann und als Konstanten bzw. Tabellen im Programm der zentralen Steuereinheit des Verbindungsgerätes abgelegt sein können.

Im Schritt S90 wird dann von der zentralen Steuereinheit unter Berücksichtigung des Energieeintragskorrekturfaktors die korrigierte Schweißspannung bzw. korrigierte Schweißzeit eingestellt. Anschließend beginnt in Schritt S90 der eigentliche Schweißvorgang, während dem die Steuer-Vorrichtung die Schweißparameter überwacht und ggf. nachsteuert.

Nach Ablauf der festgelegten Schweißzeit wird das Verfahren mit Schritt S100 beendet. Die Verbindungsstelle muss dann lediglich für eine festgelegte Zeitdauer abkühlen. Es ist auch möglich, die geforderte Abkühlzeit von der SteuerVorrichtung in einem zusätzlichen Verfahrenschritt überwachen zu lassen.

**Patentansprüche**

1. Verfahren zur Optimierung des Schweißenergieeintrags in die Heizwendel eines Heizwendelfittings, bei dem eine Schweißstrom-Versorgungseinheit über Anschlussleitungen und Verbindungselemente mit Anschlusselementen des Heizwendelfittings verbunden wird, bei dem der Effektivwert einer Wechselspannungs-Schweißspannung mit einer bestimmten Grundfrequenz und eine zugehörige Schweißzeit bekannt sind, und wenigstens eine elektrische Kenngröße des Heizwendelfittings erfasst wird, wobei als eine erste elektrische Kenngröße die Induktivität der Heizwendel des Heizwendelfittings erfasst wird; und

**dadurch gekennzeichnet, dass** ein optimaler Schweißenergieeintrag in das Heizwendelfitting mit mindestens einem Energieeintragskorrekturfaktor gesteuert wird, der aus der wenigstens einen erfassten elektrischen Kenngröße des Heizwendelfittings ermittelt wird.

2.  Verfahren nach Anspruch 1,
    **dadurch gekennzeichnet, dass** die Schweißstrom-Versorgungseinheit das Heizwendelfitting mit einer Gleichspannungs-Schweißspannung versorgt.

3.  Verfahren nach Anspruch 1,
    **dadurch gekennzeichnet, dass** die Schweißstrom-Versorgungseinheit das Heizwendelfitting mit einer Wechselspannungs-Schweißspannung versorgt, deren Grundfrequenz von einem Toleranzbereich der Grundfrequenz der zu dem Heizwendelfitting bekannten Wechselspannungs-Schweißspannung abweicht.

4.  Verfahren nach einem der Ansprüche 1 bis 3,
    **dadurch gekennzeichnet, dass** der Energieeintragskorrekturfaktor wenigstens aus einem Induktivitätskorrekturfaktor besteht, der im Wesentlichen zur Berücksichtigung des Einflusses der Induktivität der Heizwendel des Heizwendelfittings auf den Schweißenergieeintrag bei einer Abweichung vom Toleranzbereich der Grundfrequenz der zum Heizwendelfitting bekannten Wechselspannungs-Schweißspannung vorgesehen ist.

5.  Verfahren nach einem der vorhergehenden Ansprüche,
    **dadurch gekennzeichnet, dass** der Energieeintragskorrekturfaktor wenigstens aus einem Oberwellenkorrekturfaktor besteht, der im Wesentlichen zur Berücksichtigung des unterschiedlichen Schweißenergieeintrages der Oberwellen einer Wechselspannungs-Schweißspannung bei einer Abweichung vom Toleranzbereich der Grundfrequenz der zum Heizwendelfitting bekannten Wechselspannungs-Schweißspannung vorgesehen ist.

6.  Verfahren nach einem der vorhergehenden Ansprüche,
    **dadurch gekennzeichnet, dass** der Energieeintragskorrekturfaktor wenigstens aus einem Widerstandskorrekturfaktor besteht, der im Wesentlichen zur Korrektur der Auswirkung der Temperaturabhängigkeit des ohmschen Widerstandes der Heizwendel des Heizwendelfittings auf den Schweißenergieeintrag vorgesehen ist.

7.  Verfahren nach einem der vorhergehenden Ansprüche,
    **dadurch gekennzeichnet, dass** die wenigstens eine oder mehrere elektrische Kenngrößen des Heizwendelfittings vor dem Schweißvorgang erfasst werden.

8.  Verfahren nach einem der vorhergehenden Ansprüche,
    **dadurch gekennzeichnet, dass** die wenigstens eine oder mehrere elektrische Kenngrößen des Heizwendelfittings während dem Schweißvorgang erfasst werden.

9.  Verfahren nach Anspruch 8,
    **dadurch gekennzeichnet, dass** die wenigstens eine oder die mehreren elektrischen Kenngrößen des Heizwendelfittings während des Schweißvorgangs kontinuierlich bzw. in bestimmten Zeitabständen erfasst werden.

10. Verfahren nach einem der vorhergehenden Ansprüche,
    **dadurch gekennzeichnet, dass** als eine zweite elektrische Kenngröße der ohmsche Widerstand der Heizwendel des Heizwendelfittings erfasst wird.

11. Verfahren nach einem der vorhergehenden Ansprüche,
    **dadurch gekennzeichnet, dass** mittels des Energieeintragskorrekturfaktors die bekannte Schweißzeit in jedem einzelnen Schweißvorgang individuell angepasst wird.

12. Verfahren nach einem der vorhergehenden Ansprüche,
    **dadurch gekennzeichnet, dass** mittels des Energieeintragskorrekturfaktors und dem bekannten Effektivwert der Wechselspannungs-Schweißspannung der Effektivwert einer Wechselspannungs-Schweißspannung mit einer anderen Grundfrequenz als die der bekannten Wechselspannungs-Schweißspannung oder eine Gleichspannungs-Schweißspannung in jedem einzelnen Schweißvorgang individuell eingestellt wird.

**13.** Verfahren nach Anspruch einem der vorhergehenden Ansprüche,
**dadurch gekennzeichnet, dass** die Grundfrequenz der zu einem Heizwendelfitting bekannten Wechselspannungs-Schweißspannung in einem Toleranzbereich von etwa 25 Hz bis 75 Hz liegt.

**14.** Verfahren nach einem der vorhergehenden Ansprüche,
**dadurch gekennzeichnet, dass** die Induktivität der Heizwendel aus dem Phasenwinkel zwischen Strom und Spannung eines an das Heizwendelfitting angelegten Wechselspannungsmesssignals bestimmt wird.

**15.** Verfahren nach einem der vorhergehenden Ansprüche,
**dadurch gekennzeichnet, dass** die Induktivität über eine Veränderung der Resonanzfrequenz eines Messschwingkreises, zu dem die Heizwendel des Heizwendelfittings geschaltet wird, bestimmt wird.

**16.** Verfahren nach einem der vorhergehenden Ansprüche,
**dadurch gekennzeichnet, dass** die Induktivität aus der Differenz des komplexen Widerstandes der Heizwendel des Heizwendelfittings bei wenigstens zwei in der Frequenz unterschiedlichen Messsignalen bestimmt wird.

**17.** Verfahren nach einem der vorhergehenden Ansprüche,
**dadurch gekennzeichnet, dass** die Erfassung der elektrischen Kenngrößen über separate Messleitungen erfolgt, die an den Anschlusselementen des Heizwendelfittings anschließbar sind.

**18.** Verfahren einem der vorhergehenden Ansprüche,
**dadurch gekennzeichnet, dass** die Erfassung der elektrischen Kenngrößen über die Anschlussleitungen der Schweißstrom-Versorgungseinheit an den Anschlusselementen des Heizwendelfittings erfolgt.

**19.** Heizwendel-Schweißvorrichtung, insbesondere zum Durchführen des Verfahrens nach einem der Ansprüche 1 bis 18, mit wenigstens einer Schweißstrom-Versorgungseinheit, mit mindestens zwei mit der Schweißstrom-Versorgungseinheit verbundenen Anschlussleitungen, die jeweils ein Verbindungselement aufweisen und über die Schweißstrom-Versorgungseinheit mit Anschlusselementen mindestens einer Heizwendel eines Heizwendelfittings lösbar verbindbar ist,
wobei die Schweißstrom-Versorgungseinheit Mittel zum Eingeben von Schweißparametern und wenigstens eine zentrale Steuereinheit besitzt und die wenigstens eine zentrale Steuereinheit mit mindestens einem Mittel zum Erfassen zumindest einer elektrischen Kenngröße der Heizwendel des Heizwendelfittings verbunden ist,
wobei eine erste elektrische Kenngröße die Induktivität der Heizwendel des Heizwendelfittings ist; und
**dadurch gekennzeichnet, dass** die zentrale Steuereinheit ausgelegt ist, mit der zumindest einen elektrischen Kenngröße einen oder mehrere Schweißparameter bei einer Abweichung von einer bekannten Wechselspannungs-Schweißspannung mit einer bestimmten Grundfrequenz, deren Effektivwert für das Heizwendelfitting bekannt ist, mittels eines Energieeintragskorrekturfaktors anzupassen und den Schweißenergieeintrag in das Heizwendelfitting zu steuern.

**20.** Heizwendel-Schweißvorrichtung nach Anspruch 19 ,
**dadurch gekennzeichnet, dass** eine zweite elektrische Kenngröße der ohmsche Widerstand der Heizwendel des Heizwendelfittings ist.

**21.** Heizwendel-Schweißvorrichtung nach einem der Ansprüche 19 oder 20,
**dadurch gekennzeichnet, dass** die anzupassenden Schweißparameter wenigstens ein Effektivwert einer Wechselspannungs-Schweißspannung bzw. eine Gleichspannung und/oder eine Schweißzeit sind.

**22.** Heizwendel-Schweißvorrichtung nach einem der Ansprüche 19 bis 21,
**dadurch gekennzeichnet, dass** die bekannten Schweißparameter einem Etikett an dem Heizwendelfitting entnehmbar sind.

**23.** Heizwendel-Schweißvorrichtung nach Anspruch 22,
**dadurch gekennzeichnet, dass** die bekannten Schweißparameter auf dem Etikett in Form eines Barcodes bereitgestellt sind und die Mittel zum Eingeben eine Barcodelesevorrichtung zum wenigstens Einlesen der Schweißparameter von dem Barcode in die zentrale Steuereinheit sind.

**24.** Heizwendel-Schweißvorrichtung nach einem der Ansprüche 19 bis 23,
**dadurch gekennzeichnet, dass** die Schweißspannung eine Gleichspannung ist.

**25.** Heizwendel-Schweißvorrichtung nach einem der Ansprüche 19 bis 23,
**dadurch gekennzeichnet, dass** die Schweißspannung eine Wechselspannung ist, deren Grundfrequenz von der Grundfrequenz der zu dem Heizwendelfitting bekannten Wechselspannungs-Schweißspannung abweicht.

**Claims**

**1.** Method for optimizing the welding energy input into the heating coil of a heating coil fitting, in which a welding current supply unit is connected via connection lines and connecting elements to connection elements of the heating coil fitting, in which the effective value of an AC welding voltage with a defined base frequency and a corresponding welding period are known, and at least one electrical parameter of the heating coil fitting is determined, wherein as a first electrical parameter the inductance of the heating coil of the heating coil fitting is determined; and **characterised in that** the optimal welding energy input into the heating coil fitting is controlled by at least one energy input correction factor, which is determined from the at least one measured electrical parameter of the heating coil fitting.

**2.** Method according to claim 1, **characterised in that** the welding current supply unit provides the heating coil fitting with a DC welding voltage.

**3.** Method according to claim 1, **characterised in that** the welding current supply unit provides the heating coil fitting with an AC welding voltage, the base frequency of which deviates from a tolerance range for a base frequency of the established AC welding voltage for the heating coil fitting.

**4.** Method according to any one of claims 1 to 3, **characterised in that** the energy input correction factor comprises at least an inductance correction factor, which is provided to take into account the influence of the inductance of the heating coil of the heating coil fitting on the welding energy input in case of a deviation from a tolerance range of a base frequency of an established AC welding voltage for the heating coil fitting.

**5.** Method according to one of the preceding claims, **characterised in that** the energy input correction factor comprises at least one harmonics correction factor, which is designed to take into account a difference in welding energy input due to the harmonics of an AC welding voltage in case of a deviation from a tolerance range for a base frequency of the established AC welding voltage for the heating coil fitting.

**6.** Method according to one of the preceding claims, **characterised in that** the energy input correction factor comprises at least one resistance correction factor, which is designed to correct the impact of the temperature dependency of the ohmic resistance of the heating coil of the heating coil fitting on the welding energy input.

**7.** Method according to one of the preceding claims, **characterised in that** at least one or more electrical parameters of the heating coil fitting are established before the welding process.

**8.** Method according to one of the preceding claims, **characterised in that** at least one or more electrical parameters of the heating coil fitting are measured during the welding process.

**9.** Method according to claim 8, **characterised in that** at least one or more electrical parameters of the heating coil fitting are measured during the welding process either continuously or at defined time intervals.

**10.** Method according to one of the preceding claims, **characterised in that** the ohmic resistance of the heating coil of the heating coil fitting is measured as a second electrical parameter.

**11.** Method according to one of the preceding claims, **characterised in that** the established welding time is adjusted individually by means of the energy input correction factor in each individual welding process.

**12.** Method according to one of the preceding claims, **characterised in that** by means of the energy input correction factor and the known effective value of the AC welding voltage, the effective value of an AC welding voltage is adjusted individually with a base frequency which is different from the known AC welding voltage or a DC welding voltage for each individual welding process.

**13.** Method according to one of the preceding claims, **characterised in that** there is a tolerance range of about 25 Hz to 75 Hz for a base frequency of an AC welding voltage that is established for the heating coil fitting.

14. Method according to one of the preceding claims, **characterised in that** the inductance of the heating coil is determined using a phase angle between the current and voltage of an AC measurement signal applied to the heating coil fitting.

15. Method according to one of the preceding claims, **characterised in that** the inductance is measured via a change in the resonance frequency of a measurement resonant circuit connected to the heating coil of the heating coil fitting.

16. Method according to one of the preceding claims, **characterised in that** the inductance is determined from the difference in the complex heating coil resistance of the heating coil fitting for at least two measurement signals with different frequencies.

17. Method according to one of the preceding claims, **characterised in that** the electrical parameters are measured via separate measurement lines, which can be connected to the contact elements of the heating coil fitting.

18. Method according to one of the preceding claims, **characterised in that** the electrical parameters are measured via the connecting lines of the welding current supply unit at the contact elements of the heating coil fitting.

19. Heating coil welding unit, in particular for performing the method according to one of claims 1 to 18, with at least one welding current supply unit, with at least two connection lines connected to the welding current supply unit, which each comprise a connecting element, and by means of the welding current supply unit with connection elements at least one heating coil of a heating coil fitting can be connected in a detachable manner, wherein the welding current supply unit has means for entering welding parameters and at least one central control unit, and the at least one central control unit is connected with at least one means for determining at least one electrical parameter of the heating coil of the heating coil fitting, wherein a first electrical parameter is the inductance of the heating coil of the heating coil fitting; and **characterised in that** the central control unit is set up with the at least one electrical parameter to adjust one or more welding parameters by means of an energy input correction factor in the case of a deviation from a known AC welding voltage with a specific base frequency, the effective value of which is known for the heating coil fitting, and to control the welding energy input into the heating coil fitting.

20. Heating coil welding unit according to claim 19, **characterised in that** a second electrical parameter is the ohmic resistance of the heating coil of the heating coil fitting.

21. Heating coil welding unit according to one of claims 19 or 20, **characterised in that** the welding parameters to be adjusted are at least one effective value of an AC welding voltage, a DC voltage and/or a welding time.

22. Heating coil welding unit according to one of claims 19 to 21, **characterised in that** the known welding parameters can be read from a label on the heating coil fitting.

23. Heating coil welding unit according to claim 22, **characterised in that** the established welding parameters are provided as a barcode on the label and the means for entering is a barcode reading device at least for reading the welding parameters from the barcode into the central control unit.

24. Heating coil welding unit according to one of claims 19 to 23, **characterised in that** the welding voltage is a DC voltage.

25. Heating coil welding unit according to one of claims 19 to 23, **characterised in that** the welding voltage is an AC voltage, the base frequency of which differs from the base frequency of the AC welding voltage known for the heating coil fitting.

**Revendications**

1. Procédé d'optimisation de l'apport d'énergie de soudage dans le filament de chauffage d'un collier chauffant, dans lequel une unité d'alimentation en courant de soudage est reliée par des conduites de raccordement et des éléments de connexion aux éléments de raccordement du collier chauffant, dans lequel la valeur effective d'une tension de soudage de tension alternative comprenant une fréquence de base définie et un temps de soudage associé sont connus, et au moins un paramètre électrique caractéristique du collier chauffant est détecté, l'inductance du filament de chauffage du collier chauffant étant détectée comme premier paramètre électrique caractéristique ; et **caractérisé en ce qu'**un apport d'énergie de soudage optimal dans le collier chauffant est commandé avec au moins un facteur de correction d'apport d'énergie, qui est déterminé à partir du au moins un paramètre électrique caractéristique détecté du collier chauffant.

**2.** Procédé selon la revendication 1,
**caractérisé en ce que** l'unité d'alimentation en courant de soudage alimente le collier chauffant avec une tension de soudage de tension alternative.

**3.** Procédé selon la revendication 1,
**caractérisé en ce que** l'unité d'alimentation en courant de soudage alimente le collier chauffant avec une tension de soudage de tension alternative dont la fréquence de base dévie d'une plage de tolérance de la fréquence de base de la tension de soudage de tension alternative connue par rapport au collier chauffant.

**4.** Procédé selon l'une quelconque des revendications 1 à 3,
**caractérisé en ce que** le facteur de correction d'apport d'énergie est constitué d'au moins un facteur de correction d'inductance, qui est prévu sensiblement pour prendre en compte l'influence de l'inductance du filament de chauffage du collier chauffant sur l'apport d'énergie de soudage dans le cas d'un écart de la plage de tolérance de la fréquence de base de la tension de soudage de tension alternative connue par rapport au collier chauffant.

**5.** Procédé selon l'une quelconque des revendications précédentes,
**caractérisé en ce que** le facteur de correction d'apport d'énergie est constitué d'au moins un facteur de correction d'onde harmonique qui est prévu sensiblement pour prendre en considération l'apport d'énergie de soudage différent des ondes harmoniques d'une tension de soudage de tension alternative dans le cas d'un écart de la plage de tolérance de la fréquence de base de la tension de soudage de tension alternative connue par rapport au collier chauffant.

**6.** Procédé selon l'une quelconque des revendications précédentes,
**caractérisé en ce que** le facteur de correction d'apport d'énergie est constitué d'au moins un facteur de correction de résistance qui est prévu sensiblement pour corriger l'effet du rapport de dépendance de la température de la résistance ohmique du filament de chauffage du collier chauffant sur l'apport d'énergie de soudage.

**7.** Procédé selon l'une quelconque des revendications précédentes,
**caractérisé en ce que** le ou les divers paramètres électriques caractéristiques du collier chauffant sont détectés avant le processus de soudage.

**8.** Procédé selon l'une quelconque des revendications précédentes,
**caractérisé en ce que** le ou les divers paramètres électriques caractéristiques du collier chauffant sont détectés pendant le processus de soudage.

**9.** Procédé selon la revendication 8,
**caractérisé en ce que** le ou les divers paramètres électriques caractéristiques du collier chauffant sont détectés pendant le processus de soudage en continu et/ou à certains intervalles de temps définis.

**10.** Procédé selon l'une quelconque des revendications précédentes,
**caractérisé en ce que** la résistance ohmique du filament de chauffage du collier chauffant est détectée comme second paramètre électrique caractéristique.

**11.** Procédé selon l'une quelconque des revendications précédentes,
**caractérisé en ce que** le temps de soudage connu au cours de chaque processus de soudage individuel est adapté de manière individuelle au moyen du facteur de correction d'apport d'énergie.

**12.** Procédé selon l'une quelconque des revendications précédentes,
**caractérisé en ce que** la valeur effective d'une tension de soudage de tension alternative comprenant une autre fréquence de base que celle de la tension de soudage de tension alternative connue ou une tension de soudage de tension alternative est réglée individuellement au cours de chaque processus de soudage individuel au moyen du facteur de correction d'apport d'énergie et de la valeur effective connue de la tension de soudage de tension alternative.

13. Procédé selon l'une quelconque des revendications précédentes, **caractérisé en ce que** la fréquence de base de la tension de soudage de tension alternative connue par rapport à un collier chauffant se situe dans une plage de tolérance d'approximativement 25 Hz à 75 Hz.

14. Procédé selon l'une quelconque des revendications précédentes, **caractérisé en ce que** l'inductance du filament de chauffage est définie à partir de l'angle de phase entre le courant et la tension d'un signal de mesure de tension alternative appliqué sur le collier chauffant.

15. Procédé selon l'une quelconque des revendications précédentes, **caractérisé en ce que** l'inductance est définie par une modification de la fréquence de résonance d'un circuit résonant de mesure auquel le filament de chauffage du collier chauffant est connecté.

16. Procédé selon l'une quelconque des revendications précédentes, **caractérisé en ce que** l'inductance est définie à partir de la différence de la résistance complexe du filament de chauffage du collier chauffant dans le cas d'au moins deux signaux de mesure différents en fréquence.

17. Procédé selon l'une quelconque des revendications précédentes, **caractérisé en ce que** la détection des paramètres électriques caractéristiques s'effectue par des conduites de mesure séparées, qui peuvent être raccordées aux éléments de raccordement du collier chauffant.

18. Procédé selon l'une quelconque des revendications précédentes, **caractérisé en ce que** la détection des paramètres électriques caractéristiques s'effectue par les conduites de raccordement de l'unité d'alimentation en courant de soudage sur les éléments de raccordement du collier chauffant.

19. Dispositif de soudage à filament de chauffage, destiné en particulier à réaliser le procédé selon l'une quelconque des revendications 1 à 18, comprenant au moins une unité d'alimentation en courant de soudage, comprenant au moins deux conduites de raccordement reliées à l'unité d'alimentation en courant de soudage, qui comportent respectivement un élément de liaison et peuvent être reliées par l'unité d'alimentation en courant de soudage à des éléments de raccordement d'au moins un filament de chauffage d'un collier chauffant,
l'unité d'alimentation en courant de soudage possédant des moyens destinés à introduire des paramètres de soudage et au moins une unité de commande centrale et la au moins une unité de commande centrale étant reliée à au moins un moyen destiné à détecter au moins un paramètre électrique caractéristique du filament de chauffage du collier chauffant,
un premier paramètre électrique caractéristique étant l'inductance du filament de chauffage du collier chauffant ; et **caractérisé en ce que** l'unité de commande centrale, avec le au moins un paramètre électrique caractéristique ou un ou plusieurs paramètres de soudage dans le cas d'un écart par rapport à une tension de soudage de tension alternative avec une fréquence de base définie, dont la valeur effective pour le collier chauffant est connue, est dimensionnée pour réaliser une adaptation au moyen d'un facteur de correction d'apport d'énergie et commander l'apport d'énergie de soudage dans le collier chauffant.

20. Dispositif de soudage à filament de chauffage selon la revendication 19, **caractérisé en ce qu'**un second paramètre électrique caractéristique est la résistance ohmique du filament de chauffage du collier chauffant.

21. Dispositif de soudage à filament de chauffage selon la revendication 19 ou 20, **caractérisé en ce que** les paramètres de soudage à adapter sont au moins une valeur effective d'une tension de soudage de tension alternative et/ou une tension continue et/ou un temps de soudage.

22. Dispositif de soudage à filament de chauffage selon l'une quelconque des revendications 19 à 21, **caractérisé en ce que** les paramètres de soudage connus peuvent être indiqués sur une étiquette sur le collier chauffant.

23. Dispositif de soudage à filament de chauffage selon la revendication 22, **caractérisé en ce que** les paramètres de soudage connus sont mis à disposition sur l'étiquette sous forme d'un code à barres et les moyens d'introduction sont un dispositif de lecture de code à barres destiné à au moins lire les paramètres de soudage provenant du code à barres dans l'unité de commande centrale.

24. Dispositif de soudage à filament de chauffage selon l'une quelconque des revendications 19 à 23, **caractérisé en ce que** la tension de soudage est une tension continue.

25. Dispositif de soudage à filament de chauffage selon l'une quelconque des revendications 19 à 23, **caractérisé en ce que** la tension de soudage est une tension alternative dont la fréquence de base dévie de la fréquence de base de la tension de soudage de tension alternative connue par rapport au collier chauffant.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9720682 A
- US 4684789 A